# EUROPÄISCHE PATENTSCHRIFT

(11) **EP 1 634 688 B1**
(45) Veröffentlichungstag und Bekanntmachung des Hinweises auf die Patenterteilung: **22.07.2009**
(21) Anmeldenummer: 04021264.9
(22) Anmeldetag: 08.09.2004
(51) Int. Cl.: B29C 47/08

(54) **Handextruderschweissgerät**
Handheld extrusion welding device
Dispositif de soudage par extrusion portable

(43) Veröffentlichungstag der Anmeldung: 15.03.2006
(73) Patentinhaber: Leister Process Technologies, 6056 Kägiswil (CH)
(72) Erfinder: Di Miceli, Giuseppe, 5737 Menziken (CH); Arnold, Hans, 6056 Kägiswil (CH)
(74) Vertreter: Klocke, Peter

(56) Entgegenhaltungen:
- EP-A- 0 887 116
- EP-A- 1 023 948
- DE-A1- 19 639 048
- US-A- 5 988 865
- PATENT ABSTRACTS OF JAPAN Bd. 008, Nr. 174 (M-316), 10. August 1984 (1984-08-10) & JP 59 067030 A (MITSUBISHI JUSHI KK), 16. April 1984 (1984-04-16)

## Beschreibung

Die vorliegende Erfindung betrifft ein Handextruderschweißgerät zum Verschweißen von thermoplastischen Kunststoffmaterialien mittels einer Extruderschnecke, die über eine in einem Gehäuse angeordnete Antriebseinrichtung angetrieben wird, einem die Extruderschnecke umgebenden Schneckenzylinder und mindestens einem Einzugskanal für einen Kunststoffschweißdraht, der zumindest teilweise über die Länge der Einzugszone der Extruderschnecke sich erstreckt und rinnenförmig ausgebildet ist entsprechend dem Oberbegriff des Anspruchs 1.

Solche Schweißgeräte sind allgemein bekannt und werden zum Verschweißen von Kunststoffplatten oder dergleichen verwendet. Sie bestehen im Wesentlichen aus einer Handbohrmaschine, die als Antrieb dient, und einem darauf abnehmbar aufgesetzten Vorsatzgerät. In dem Vorsatzgerät wird ein über einen Förderkanal und eine Fördereinrichtung zugeführter Kunststoffstrang in Form eines Kunststoffdrahtes zunächst zerstückelt und dann mittels einer Schnecke und einer Heizeinrichtung plastifiziert. Ein derartiges Schweißgerät ist beispielsweise aus den Dokumenten EP-A-887 116 und DE-A-28 23 171 bekannt.

Diese bekannten Handextruderschweißgeräte, wie sie auch aus der EP-A-1 023 948 oder EP-B-0 637 497 bekannt sind, weisen einen Einzugskanal auf, der zumindest teilweise über die Länge der Einzugszone der Extruderschnecke verläuft und rinnenförmig ausgebildet ist, um den Kunststoffschweißdraht in Kontakt mit dem Einzugsgewinde zu bringen.

Bei allen bekannten Handextruderschweißgeräten stellt das Verdrillen des eingezogenen Kunststoffschweißdrahtes ein Problem dar, da durch die Drehung der Extruderschnecke der Kunststoffschweißdraht entlang seiner Längsachse zusätzlich zu der ohnehin bereits vorhandenen Verdrillung durch das Abwickeln von einer Abrollvorrichtung verdrillt wird. Dies führt zu unerwünschten Schlaufenbildungen und Überwerfungen, die die Handhabung erschweren und unter Umständen zum Abbruch des Schweißvorgangs führen, um die Schlaufen zu entfernen.

Der vorliegenden Erfindung liegt daher die Aufgabe zu Grunde, ein Handextruderschweißgerät vorzuschlagen, bei dem beim Einziehen des Kunststoffschweißdrahtes dieser nicht oder nur geringfügig in der Längsachse verdreht wird.

Diese Aufgabe wird durch ein Handextruderschweißgerät gemäß dem Kennzeichnenden Teil des Anspruchs 1. Weitere vorteilhafte Ausgestaltungen sind den Unteransprüchen zu entnehmen.

Erfindungsgemäß weist das Handextruderschweißgerät in dem Einzugskanal eine in Längsrichtung verlaufende Erhebung auf, die sich beim Einziehen des Kunststoffschweißdrahtes in diesen eindrückt, so dass er hinsichtlich seiner Lage fixiert ist und durch die Drehbewegung der Extruderschnecke nicht wesentlich mitgedreht wird. Dies bewirkt, dass der aus dem Handextruderschweißgerät herausragende Kunststoffschweißdraht auf jeden Fall, wie gewünscht, nicht mitgedreht wird. Grundsätzlich kann die Erhebung kantig oder rund ausgebildet sein. Vorzugsweise ist die Erhebung spitz ausgebildet, um einerseits Reibungsverluste zu vermeiden und anderseits möglichst führungswirksam in den Schweißdraht einzugreifen

Grundsätzlich kann die in Längsrichtung verlaufende spitze Erhebung auch mehrfach ausgeführt sein, wobei vorteilhafterweise eine Erhebung am Boden des Einzugskanals, d.h. in einem Bereich gegenüber der Einzugszone der Extruderschnecke, ausreichend ist. Wesentlich ist, dass die Erhebung ausreichend spitz ist und der eingezogene Kunststoffschweißdraht durch das Eindrücken der Spitze in der Längsrichtung gegen Verdrillen fixiert ist.

Gemäß einer bevorzugten Ausbildung verläuft der Boden des Einzugskanals schräg zu der Extruderschnecke, so dass der Einzugskanal fortlaufend an Tiefe verliert und am Ende ausläuft. Damit wird die Eindringtiefe des Schweißdrahts in den Einzugsbereich der Extruderschnecke während des Einzugs kontinuierlich erhöht.

Je nach Art der Herstellung kann der Einzugskanal in einer ein- oder zweiteiligen Hülse angeordnet sein, die die Extruderschnecke umgibt. Dies hat einen großen Vorteil bei der Herstellung und dem Zusammenbau des Handextruderschweißgeräts, da die Hülse gesondert gefertigt und leicht eingefügt werden kann. So wird der Einzugskanal bei einer einteiligen Hülse mittels Drahterosion und bei einer zweiteiligen Hülse durch Fräsen herzustellen sein. Auch Sinterverfahren sind möglich.

Gemäß einer besonderen Ausgestaltung des Handextruderschweißgeräts ist die Hülse in einem gehäuseseitigen Halteelement mit einer zentralen Durchgangsbohrung für die Extruderschnecke gehalten und umgibt die Extruderschnecke in der Einzugszone. Diese Art der Fixierung der Einzugshülse hat hinsichtlich der kostengünstigen Herstellung bei großer Stabilität enorme Vorteile. Je nach Aufbau des Handextruderschweißgeräts kann das Halteelement gleichzeitig als Kühlkörper ausgebildet sein, der ein Gehäuse trägt, in dem im Gegensatz zum Stand der Technik die Antriebseinrichtung und auch Teile der Heizeinrichtung integriert sind. Dabei kann das Halteelement / Kühlkörper gleichzeitig noch die Klemmung des Getriebeabgangs für die Extruderschnecke übernehmen. Es ist auch möglich, das Halteelement nur als Trennelement für den Getriebeabgang eines Handextruderschweißgeräts zu verwenden. Die Anordnung des Einzugskanals in einer derartigen Ausbildung erlaubt somit ohne Änderung der Hülse verschiedene Aufbauten von Handextruderschweißgeräten.

Nachfolgend wird die Erfindung in Verbindung mit den begleitenden Zeichnungen näher erläutert. Es stellen dar:
- Figur 1: die perspektivische Ansicht eines Handextruderschweißgeräts mit einem Gehäuse, in dem die Antriebseinrichtung und die Gebläseeinrichtung integriert sind;
- Figur 2: die perspektivische Ansicht eines anderen Extruderschweißgeräts, bei dem die Antriebseinrichtung und das Gebläse nicht in einem Gehäuse integriert sind;
- Figur 3: die Draufsicht auf ein Handextruderschweißgerät gemäß Figur 1 mit einem Teilausschnitt im Bereich der Einzugszone der Extruderschnecke;
- Figur 4: die vergrößerte Darstellung des Teilausschnitts gemäß Figur 3;
- Figur 5: die perspektivische Stirnansicht einer Einzugshilfe;
- Figur 6: die Stirnansicht auf eine einteilige Einzugshülse und
- Figur 7: die perspektivische Vorderansicht eines Klemmelementes für ein Extruderschweißgerät gemäß Figur 2.

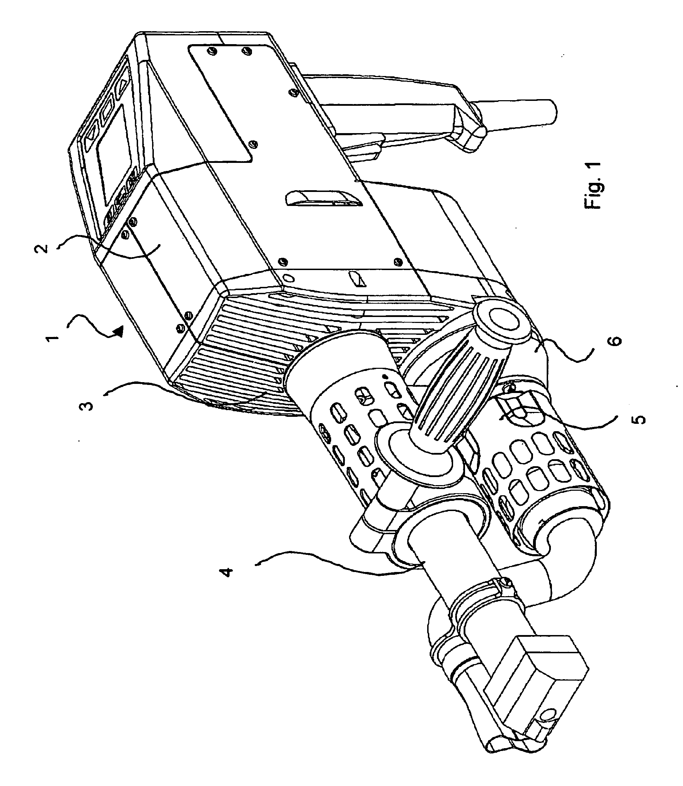

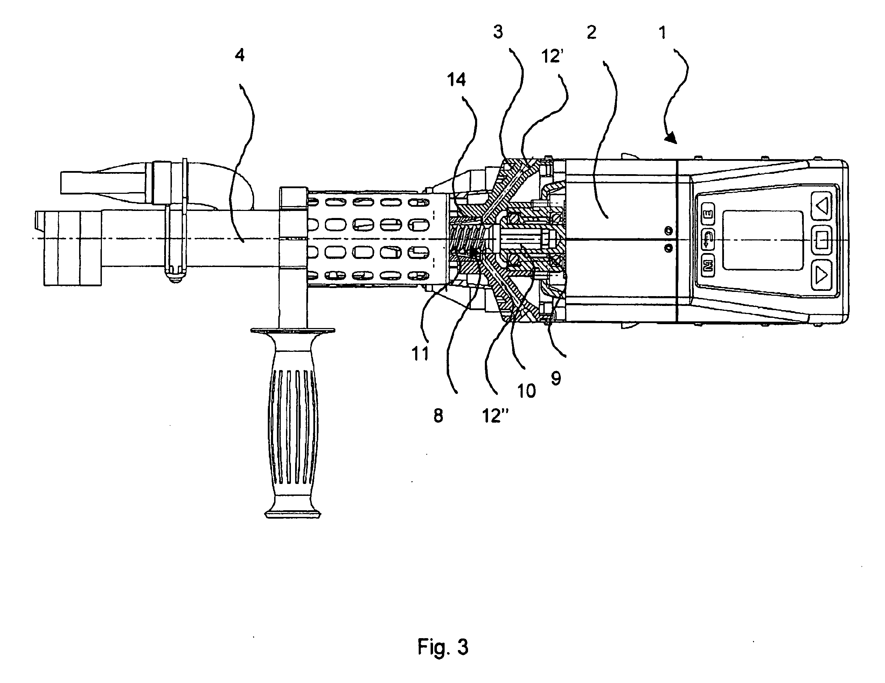

Figur 1 zeigt eine Ausführungsform eines Handextruderschweißgeräts 1 mit einem Gehäuse 2, das einen Kühlkörper 3 als Basisteil und tragendes Element aufweist. Auf der anderen Seite des Kühlkörpers 3 befindet sich in einem Schneckenzylinder 4 eine Extruderschnecke 8 und eine Heizeinrichtung 5 mit einem vorgeschalteten Gebläse 6. Die Extruderschnecke 8 weist üblicherweise eine Einzugszone 11 (Figur 3) und eine Föder/Plastifizierzone auf.

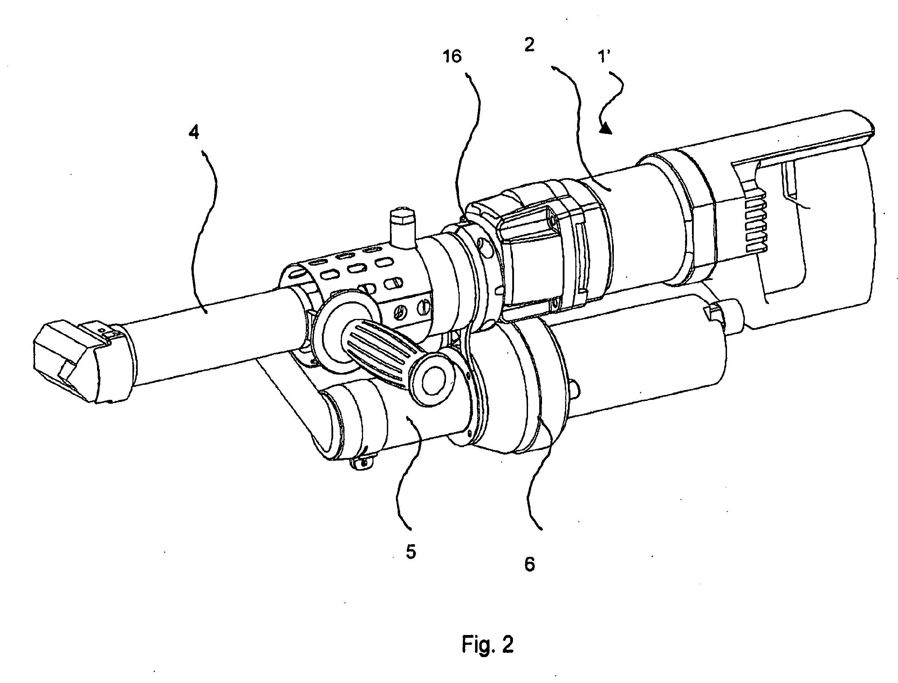

Figur 2 zeigt eine andere Ausbildung eines Extruderschweißgeräts 1', bei dem in das Gehäuse 2 die Heizeinrichtung 5 mit dem vorgeschalteten Gebläse 6 nicht integriert ist und damit keinen Kühlkörper 3 wie in der Figur 1 dargestellt aufweist.

Figur 3 zeigt in einem Teilaufschnitt auf das Extruderschweißgerät 1 gemäß der Figur 1 einen Teil der Extruderschnecke 8 mit dem in einer Lagerung 9 eingesteckten Schaft 10 sowie der daran anschließenden Einzugszone 11.

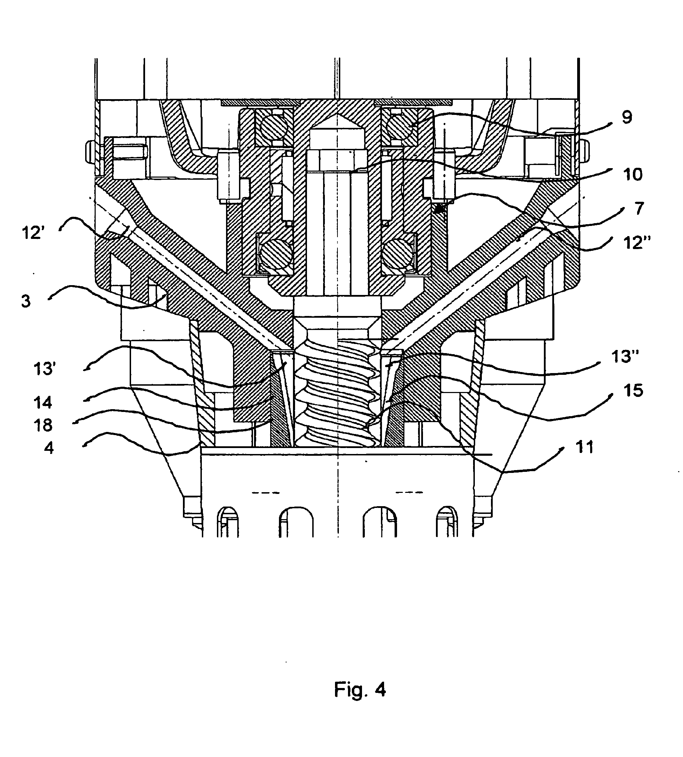

Die vergrößerte Darstellung in der Figur 4 zeigt zwei unterschiedliche Zuführkanäle 12' und 12" in dem Kühlkörper 3 für unterschiedliche Schweißdrahtdurchmesser, die jeweils in einen Einzugskanal 13' und 13" in eine die Einzugszone 11 umgebenden Einzugshülse 14 münden. Die Einzugskanäle 13', 13" sind nutförmig ausgebildet und verlaufen schräg zu der Extruderschnecke 8. Am Boden des jeweiligen Einzugskanals befindet sich eine in Längsrichtung verlaufende spitze Erhebung 15, die das Verdrehen des Schweißdrahtes beim Einziehen verhindert.

Die Einzugshülse 14, die in diesem Ausführungsbeispiel einstückig ausgebildet ist, ist in dem Kühlkörper 3 in einem Stutzen 16 eingesteckt. Der Kühlkörper 3 dient gleichzeitig als Klemmelement, um den Getriebeabgang 7 mit integrierter Lagerung 9 für den Schaft 10 der Extruderschnecke 8 zu klemmen.

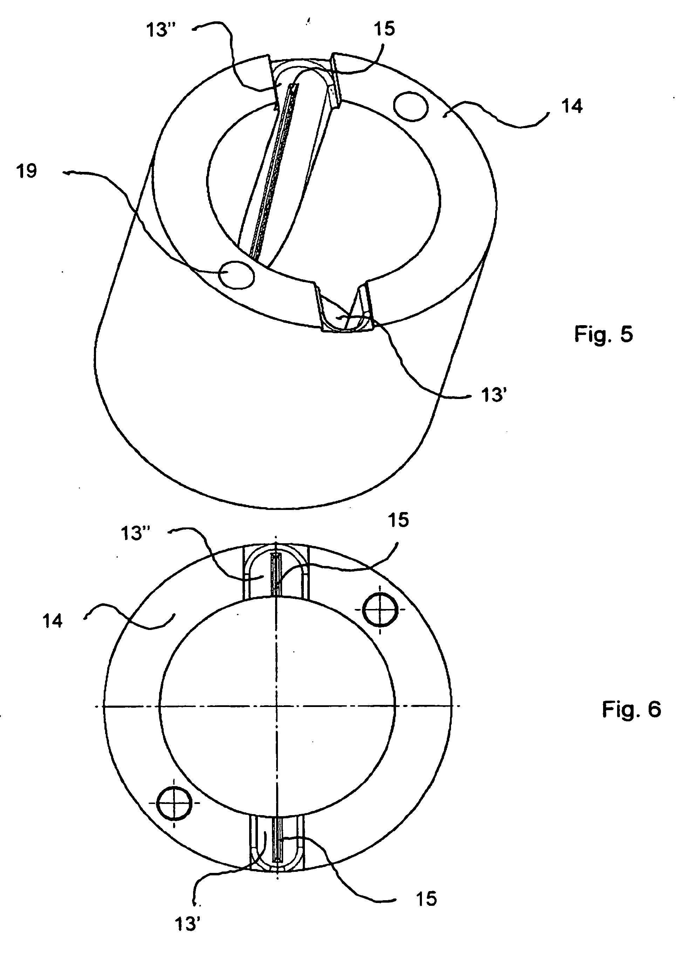

Die Figuren 5 und 6 zeigen verschiedene Ansichten der Einzugshülse 14 mit den nutförmigen Einzugskanälen 13' und 13" für unterschiedliche Schweißdrahtdurchmesser und der darin in Längsrichtung verlaufenden spitzen Erhebung 15. Die Einzugskanäle 13' und 13" laufen, wie aus den Figuren ersichtlich, gegen Ende der Hülse aus, so dass der gesamte Schweißdraht in den Einzugsbereich der Extruderschnecke 8 gelangt. Die Bohrungen 19 dienen als Verdrehsicherung mittels darin eingreifenden Stiften. Die Höhe der Erhebung 15 beträgt bei einem Ausführungsbeispiel 0,2 mm bei einer Kanaltiefe am Anfang von 3 mm.

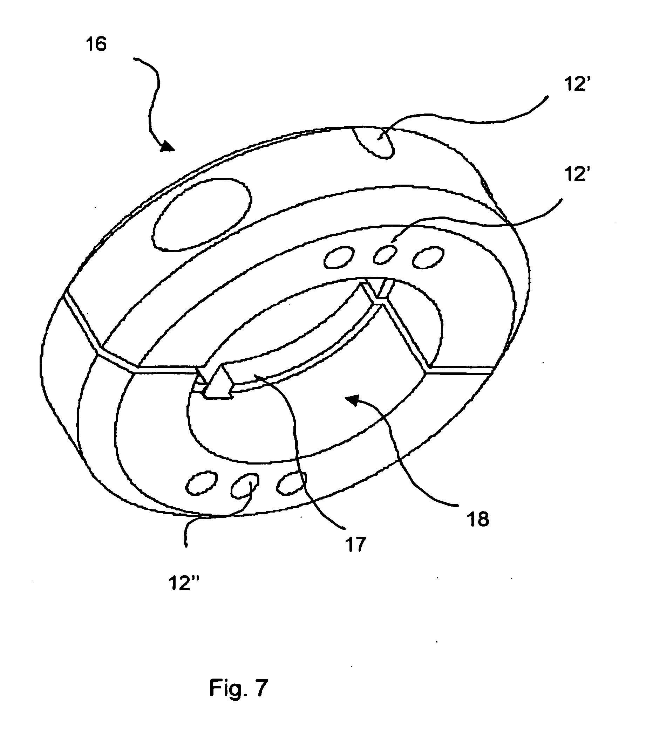

Figur 7 schließlich zeigt noch die perspektivische Vorderansicht eines zweiteiligen Klemmelementes 16, wie es bei einem Extruderschweißgerät 1' gemäß Figur 2 eingesetzt wird. Durch die zentrale Bohrung 18 wird der Getriebeabgang 7 geklemmt. Der Bund 17 dient zur axialen Kräfteaufnahme.

## Patentansprüche

1. Handextruderschweißgerät zum Verschweißen von thermoplastischen Kunststoffmaterialien mittels einer Extruderschnecke (8) in einem die Extruderschnecke (8) umgebenden Schneckenzylinder (4), die über eine in einem Gehäuse (2) angeordneten Antriebseinrichtung angetrieben wird, und mindestens einem in den Bereich des Einzugsgewindes (11) mündenden Einzugskanal (13', 13") für einen Kunststoffschweißdraht, der zumindest teilweise über die Länge einer Einzugszone (11) der Extruderschnecke (8) verläuft und rinnenförmig ausgebildet ist, **dadurch gekennzeichnet, dass** der Einzugskanal (13', 13") mindestens eine in Längsrichtung verlaufende Erhebung (15) aufweist.

2. Handextruderschweißgerät nach Anspruch 1, **dadurch gekennzeichnet, dass** die Erhebung (15) in einem der Einzugszone (11) der Extruderschnecke (8) gegenüberliegenden Bereich des Einzugskanals (13', 13") angeordnet ist.

3. Handextruderschweißgerät nach Anspruch 1 oder 2, **dadurch gekennzeichnet, dass** die Erhebung (15) spitz ausgebildet ist.

4. Handextruderschweißgerät nach einem der vorangegangenen Ansprüche, **dadurch gekennzeichnet, dass** der Boden des Einzugskanals (13', 13") schräg zu der Extruderschnecke (8) verläuft und beim Eintritt des Schweißdrahts in den Einzugskanal (13', 13") beginnend, der Einzugskanal (13', 13") immer weniger tief wird und am Ende ausläuft.

5. Handextruderschweißgerät nach einem der vorangegangenen Ansprüche, **dadurch gekennzeichnet, dass** der Einzugskanal (13', 13") in einer ein- oder zweiteiligen Einzugshülse (14) angeordnet ist, die die Einzugszone (11) der Extruderschnecke (8) umgibt.

6. Handextruderschweißgerät nach Anspruch 5, **dadurch gekennzeichnet, dass** die Einzugshülse (14) gehäuseseitig in einem Halteelement (3, 16) mit einer zentralen Bohrung (18) gehalten ist.

## Claims

1. Handheld extruder welding device for welding thermoplastic synthetic materials by means of an extrusion screw (8) in a screw cylinder (4) surrounding the extrusion screw (8) that is driven by a drive system enclosed in a housing (2), and has at least one feed channel (13', 13") for a plastic welding wire that extends, at least partially, over the length of the feed zone (11) of the extrusion screw (8) and has the shape of a chute, **characterized by** the feature(s) that the feed channel (13', 13") has at least one ridge (15) running in longitudinal direction.

2. Handheld extruder welding device according to Claim 1, **characterized by** the feature(s) that the ridge (15) is located in a section of the feed channel (13', 13") that is opposite the feed zone (11) of the handheld extruder welding device (8).

3. Handheld extruder welding device according to Claim 1 or 2, **characterized by** the feature(s) that the top of the ridge (15) is sharp.

4. Handheld extruder welding device according to any of the preceding Claims, **characterized by** the feature(s) that the bottom of the feed channel (13', 13") runs at an angle to the extrusion screw (8), and that, starting where the welding wire enters the feed channel (13', 13"), the depth of the feed channel (13', 13") decreases continuously and tapers off at the end.

5. Handheld extruder welding device according to any of the preceding Claims, **characterized by** the feature(s) that the feed channel (13', 13") is located in a one- or two-piece feed sleeve (14) that surrounds the feed zone (11) of the extrusion screw (8).

6. Handheld extruder welding device according to Claim 5, **characterized by** the feature(s) that, on the housing side, the feed sleeve (14) is held in a holding element (3, 16) with a central passage (18).

## Revendications

1. Appareil portable de soudage par extrusion, conçu pour souder des matières thermoplastiques au moyen d'une vis sans fin extrudeuse (8) logée dans un cylindre (4) entourant ladite vis sans fin extrudeuse (8), et menée par un système d'entraînement disposé dans un carter (2), comportant au moins un canal d'insertion (13', 13") qui débouche dans la région du filetage d'insertion (11), est destiné à un fil de soudage de matières plastiques, s'étend au moins en partie sur la longueur d'une zone d'insertion (11) de la vis sans fin extrudeuse (8), et est réalisé en forme de rainure, **caractérisé par le fait que** ledit canal d'insertion (13', 13") offre au moins une zone protubérante (15) s'étendant dans le sens longitudinal.

2. Appareil portable de soudage par extrusion selon la revendication 1, **caractérisé par le fait que** la zone protubérante (15) est située dans une région du canal d'insertion (13', 13") placée en regard de la zone d'insertion (11) de la vis sans fin extrudeuse (8).

3. Appareil portable de soudage par extrusion selon la revendication 1 ou 2, **caractérisé par le fait que** la zone protubérante (15) est de réalisation pointue.

4. Appareil portable de soudage par extrusion selon l'une des revendications précédentes, **caractérisé par le fait que** le fond du canal d'insertion (13', 13") s'étend à l'oblique vis-à-vis de la vis sans fin extrudeuse (8), la profondeur dudit canal d'insertion (13', 13") décroissant en permanence depuis la zone d'entrée du fil de soudage dans ledit canal d'insertion (13', 13"), et ledit canal s'achevant à l'extrémité.

5. Appareil portable de soudage par extrusion selon l'une des revendications précédentes, **caractérisé par le fait que** le canal d'insertion (13', 13") est disposé dans une douille d'insertion (14) en une ou deux partie(s), qui ceinture la zone d'insertion (11) de la vis sans fin extrudeuse (8).

6. Appareil portable de soudage par extrusion selon la revendication 5, **caractérisé par le fait que** la douille d'insertion (14) est retenue, côté carter, dans un élément d'arrêt (3, 16) muni d'un alésage central (18).
